Europäisches Patentamt

European Patent Office

Office européen des brevets

(11) Publication number: **0 308 777**
**A1**

## (12) EUROPEAN PATENT APPLICATION

(21) Application number: **88114919.9**

(22) Date of filing: **13.09.88**

(51) Int. Cl.4: **F16C 11/06**

(30) Priority: **25.09.87 IT 293687**

(43) Date of publication of application:
**29.03.89 Bulletin 89/13**

(84) Designated Contracting States:
**AT BE CH DE ES FR GB GR LI NL SE**

(71) Applicant: **Fumagalli, Pier Giorgio**
**Via Cortivo, 35**
**I-24067 Sarnico (Bergamo)(IT)**

(72) Inventor: **Fumagalli, Pier Giorgio**
**Via Cortivo, 35**
**I-24067 Sarnico (Bergamo)(IT)**

(74) Representative: **Giambrocono, Alfonso, Dr.**
**Ing. et al**
**Ing. A. Giambrocono & C. S.r.l. Via Rosolino**
**Pilo 19/B**
**I-20129 Milano(IT)**

(54) **Ball joint with a semi-open integral socket locked by an engageable ring, for orthogonal-fixing linkages.**

(57) This ball joint for linkages for fixing in orthogonal planes is characterised by a preferably but not necessarily metal shank (2), one end of which, provided with anti-withdrawal projections, is embedded in a socket (1) of anti-friction material comprising a spherical cavity (1S) with undercut edges for retaining a ball head (3T) having its pin (3) essentially orthogonal to said shank (2), said socket (1) also comprising a deep incision (1L) located between two seats for engaging the two opposite sides of a ring (4) of quadrangular perimeter to increase its facility for axially retaining the pin ball head (3T) by increasing the amount of undercut surface as a result of pulling said engagement seats towards each other.

Fig. 2

# BALL JOINT WITH A SEMI-OPEN INTEGRAL SOCKET LOCKED BY AN ENGAGEABLE RING, FOR ORTHOGONAL-FIXING LINKAGES

This invention relates to the field of ball joints and in particular ball joints with orthogonal axes.

Ball joints used for connecting together parts moving about skew axes are known to be of various types. In all these ball joints there is a problem in retaining the ball, which forms the end of a pin generally engaged with the other machine part. This retention represents a problem only in the direction of the pin axis, ie in the direction in which the ball is inserted into the socket before the flanging operation required for its retention. This problem is generally solved by upsetting a metal support containing anti-friction sockets provided with closable upper petals or split into two semi-spherical parts.

In the case of joint ends formed integrally with the ball-containing socket, a known method is to retain the ball by forming undercuts by forcing a metal ring over the outer surface of a plastics socket which has its edges made elastic by means of incisions to facilitate the prior insertion of the ball into it.

Although these types of ball joint are sufficiently effective mechanically, they are of relatively high cost in the case of small ball joints which are not subjected to excessive force so that the metal containers for the ball head could in fact be dispensed with.

An object of the present invention is to provide a ball joint for linkages in general which can be produced at a lower cost than conventional ball joints. A further object is to provide a ball joint which ensures considerable axial retention of the metal ball head of the orthogonally fixed pin.

These and further objects which will be more apparent from the detailed description given hereinafter are attained by a ball joint for linkages for fixing in orthogonal planes, characterised by a preferably but not necessarily metal shank, one end of which, provided with anti-withdrawal notches, is embedded in a socket of anti-friction material of polyamide, acetal or other type comprising a spherical cavity wth undercut edges for retaining a ball head with its pin essentially orthogonal to said shank, said socket also comprising a deep incision located between two seats for engaging the two opposite sides of a metal ring of round cross-section and quadrangular perimeter to increase its facility for axially retaining the pin ball head by increasing the amount of undercut surface as a result of pulling said engagement seats towards each other by sliding the metal ring along an inclined plane overlying the engagement seat to be hooked.

The invention is illustrated by way of non-limiting example on the accompanying drawing in which:

Figure 1 shows an integral socket of the ball joint according to the invention together with a tightening ring which is shown in its free state, ie in the required state for the insertion of the pin ball head;

Figure 2 is a perspective view of a ball joint for orthogonal fixing in the planes x and y according to the invention, complete with its pin ball head retained in its cavity by using a square ring engaged in its seats.

With reference to said figures, an integral anti-friction plastics socket 1 carries embedded in its stem 1P a metal shank 2 provided with notches 2A to increase the rigidity of its fixing to the socket. Said socket is provided with a spherical cavity 1S to house a corresponding ball head 3T of a pin 3 and comprises a lead-in taper 1C below which (with reference to the drawing) there commences a spherical undercut portion, the limit of which is indicated by the dashed line 1Q.

In a direction oblique to the metal shank, the socket comprises an incision 1L extending only to a certain depth such as to maintain continuity of the base of the socket 1F. In this manner when the two elasticated regions, ie the hinging region 1E and fixing region 1R, are subjected to "distributed loads" tending to draw them together, they undergo a flexural-torsion deformation which obviously pulls said regions together more towards their free end than towards their base 1F.

This therefore increases the amount of undercut surface expressed as the distance between the line 1Q and the free edge 1C' of the taper, particularly in the region of the incision 1L.

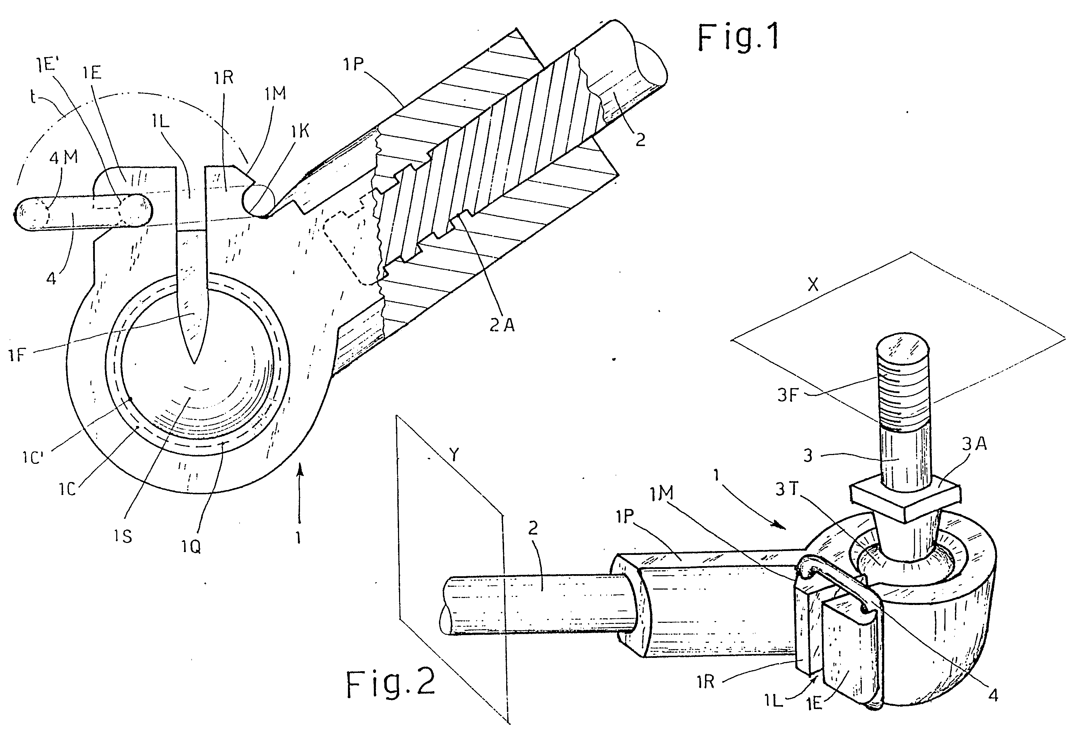

The aforesaid "distributed loads" are those resulting from the engagement of a square ring 4 which is snap-inserted into its hinging seat 1E' and then rotated from the position shown in Figure 1 to the position indicated by the thin line, which involves sliding the side 4M along a surface 1M inclined to the tangent of the circular trajectory t which the free or orbiting end of the ring 4 follows in that region. When the surface 1M has been exceeded, the ring, which is square or at least has parallel sides in the direction of the hinging axis, snaps into its semicylindrical seat 1K and remains in this position. This closure movement is done after inserting the ball head 3T into the corresponding spherical cavity 1S, this requiring a certain force to overcome the edge 1C' by making the socket parts yield elastically. When the square ring has been inserted into its seats as shown in Figure 2, this elastic yielding is no longer possible, and thus the capacity of the undercuts to axially retain the ball head 3T becomes much greater and is directly related to the mechanical properties of the material used for constructing the socket.

To allow effective clamping of the pin so that machine part for which it is intended by means of a normal nut screwed onto the thread 3F, the pin is provided with a resting seat 3A of polygonal shape and in this case square, so that it can be held with a fixed spanner during said clamping.

## Claims

1. A ball joint for linkages for fixing in orthogonal planes (x, y), characterised by a preferably but not necessarily metal shank (2) one end of which, provided with anti-withdrawal notches (2A), is embedded in a socket (1) of anti-friction material of polyamide, acetal or other type comprising a spherical cavity (1S) with edges (1C') undercut (1Q) for retaining a ball head (3T) having its pin (3) essentially orthogonal to said shank (2), said socket (1) also comprising a deep incision (1L) located between two seats (1E, 1R) for engaging the two opposite sides of a metal ring (4) having a round cross-section and a perimeter which is quadrangular or in any event comprises two parallel straight sides, in order to increase its facility for axially retaining the ball head (3T) of the pin (3) by increasing the amount of undercut surface (distance 1C'-1Q) as a result of pulling said engagement seats (1E, 1R) towards each other by sliding the metal ring (4) along a plane (1M) inclined to the circular trajectory (t) of the ring (4), said plane (1M) preceding or overlying the semicylindrical engagement seat (1K) to be hooked (Figure 2).

2. A ball joint as claimed in the preceding claim, characterised by a pin (3) provided with a seat (3A) which is to rest against the edge of that machine part to which it is to be fixed, and is of polygonal and preferably square shape so that it can be torsionally retained by normal fixed spanners.

Fig.1

1E' 1E 1R 1M
t 1K
4M 1L
1P
4 2
2A
1F
1C'
1C
1S 1Q 1

X

3F

3 3A
3T
Y 1M 1
1P

2

1R
1L 1E 4

Fig.2

EP 0 308 777 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-B-1 525 177 (SPRINGFIX) <br> * Whole document * | 1 | F 16 C 11/06 |
| A | | 2 | |
| X | DE-A-3 119 061 (SPRINGFIX) <br> * Whole document * | 1 | |
| A | GB-A- 997 836 (RUBBER PLASTICS) <br> * Page 1, lines 79-83; figure 2 * | 1 | |
| A | US-A-2 708 591 (SCHIESEL) <br> * Column 2, lines 5-6; figure 1 * | 2 | |

TECHNICAL FIELDS SEARCHED (Int. Cl.4)

F 16 C

The present search report has been drawn up for all claims

| Place of search | Date of completion of the search | Examiner |
|---|---|---|
| THE HAGUE | 04-12-1988 | ORTHLIEB CH.E. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)